(19) **Europäisches Patentamt**
**European Patent Office**
**Office européen des brevets**

(11) **EP 2 503 258 A2**

(12) **EUROPEAN PATENT APPLICATION**
published in accordance with Art. 153(4) EPC

(43) Date of publication:
**26.09.2012 Bulletin 2012/39**

(21) Application number: **10831730.6**

(22) Date of filing: **30.09.2010**

(51) Int Cl.:
*F24H 9/18* (2006.01)       *F24H 9/20* (2006.01)
*A47K 11/08* (2006.01)

(86) International application number:
**PCT/KR2010/006692**

(87) International publication number:
**WO 2011/062363 (26.05.2011 Gazette 2011/21)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **17.11.2009   KR 20090110759
30.09.2010   KR 20100094981**

(71) Applicant: **Woongjin Coway Co., Ltd.
Choongcheongnam-do 314-895 (KR)**

(72) Inventors:
• **LEE, Young-Hyuck**
  **Seoul 151-851 (KR)**
• **KIM, Jong-Min**
  **Seoul 151-851 (KR)**
• **KANG, Tae-Kyung**
  **Seoul 151-851 (KR)**

(74) Representative: **Hutter, Jacobus Johannes
Nederlandsch Octrooibureau
J.W. Frisolaan 13
2517 JS  The Hague (NL)**

(54) **METHOD AND APPARATUS FOR SUPPLYING HOT WATER BY CONTROLLING THE NUMBER OF PULSES APPLIED TO A HEATER**

(57)    There is provided a warm water supply device for controlling the number of voltage pulses applied to heaters, including: a first heater configured to have a first pre-set capacity, provided at a water inlet, and heating water introduced through the water inlet; a second heater configured to have a second pre-set capacity greater than that of the first pre-set capacity, provided at a water outlet, and heating water introduced through the water outlet; and a controller calculating a first heater driving period and calculating a second heater driving period according to a water temperature introduced through the water inlet and a set heating water temperature discharged through the water outlet by using a zero crossing control scheme, and driving the first and second heaters by controlling the number of voltage pulses applied to the first and second heater according to the heater driving periods, respectively.

FIG. 1

EP 2 503 258 A2

## Description

[Technical Field]

The present invention relates to a warm water supply device and warm water supply method controlling a number of voltage pulses applied to a heater, and more particularly, to a warm water supply device and warm water supply method for instantaneously supplying warm water used in a home bidet or a water purifier.

[Background Art]

A warm water supply device employed in a home bidet may be classified as a water tank-type warm water supply device, in which a heater is installed in a water tank or as an instant warm water-type warm water supply device in which a heater is used to heat tap water whenever warm water is required.

The water tank-type warm water supply device includes a heater disposed in a water tank for storing warm water and the water temperature within the water tank is constantly maintained at a pre-set temperature, regardless of whether or not a bidet is used. Thus, the water tank-type warm water supply device wastes standby power and occupies a large amount of space.

Accordingly, the instantaneous warm water type warm water supply device has recently been widely used. The instantaneous warm water type warm water supply device applies heat to water being discharged by means of a heater to increase temperature when a user requests the use of a bidet.

With the instantaneous warm water type warm water supply device, water does not flow constantly, so in order to guarantee operational stability, the heater should necessarily be controlled to only be operated while water is flowing. Here, in order to obtain a desired water outflow temperature in the course of operating a heater, a triac having a fast response rate and switching rate is used as a switching element, and in this case, the heater is operated by calculating a heater driving period through a phase control scheme or a zero-crossing control scheme.

However, when the heater included in the instantaneous warm water type warm water supply device is driven according to the phase control scheme, harmonics may be heavily generated to the extent that the heater may not be able to pass a harmonic test in CE (Conformité Européenne) certification as a test subject in EU countries. The generation of harmonics also causes frequent noise, resulting in a problem of damage or overheating.

Also, when the heater is driven according to the zero-crossing control scheme, a current swing (or variation) is severely generated to the extent that the heater may not be able to pass a flicker test in a CE certification test subjects of EU countries. The influence of such a current swing may shorten a lifetime and cause malfunction.

[Disclosure]

[Technical Problem]

An aspect of the present invention provides a warm water supply device and a warm water supply method capable of lengthening a heater lifetime and avoiding malfunctioning thereof by reducing a current swing (or a current variation), as well as preventing the generation of damage or overheating by reducing frequent noise.

[Technical Solution]

According to an aspect of the present invention, there is provided a warm water supply device for controlling the number of voltage pulses applied to heaters, including: a first heater configured to have a first pre-set capacity, provided at a water inlet, and heating water introduced through the water inlet; a second heater configured to have a second pre-set capacity greater than that of the first pre-set capacity, provided at a water outlet, and heating water introduced through the water outlet; and a controller calculating a first heater driving period and calculating a second heater driving period according to a water temperature introduced through the water inlet and a set heating water temperature discharged through the water outlet by using a zero crossing control scheme, and driving the first and second heaters by controlling the number of voltage pulses applied to the first and second heater according to heater driving periods thereof, respectively.

The controller may perform controlling such that the sum of the number of voltage pulses applied to the first and second heaters, respectively, is a pre-set number.

The controller may perform controlling such that the number of voltage pulses applied to the first heater is within a pre-set number, and the number of voltage pulses applied to the second heater is a pre-set number.

The controller may determine whether or not a water temperature introduced through the water inlet is lower than the set heating temperature, and when the temperature of the water is lower than the set heating temperature, the controller may calculate the heater driving periods.

The first pre-set capacity may be greater than 0 but not greater than 450W, and the second pre-set capacity may be greater that 450W but not greater than 750W.

According to another aspect of the present invention, there is provided a warm water supply method for controlling the number of voltage pulses applied to heaters, including: disposing a first heater having a first pre-set capacity and a second heater having a second pre-set capacity greater than that of the first pre-set capacity at a water inlet and a water outlet, respectively; calculating heater driving periods of the first and second heaters according to a water temperature introduced through the water inlet and a set heating water temperature discharged through the water outlet by using a zero crossing control scheme; and driving the first and second heaters by controlling the number of voltage pulses applied to the first and second heaters according to the heater driving periods, respectively to heat water introduced through the water inlet and then allow the water to be discharged through the water outlet.

The method may further include: determining whether or not the water temperature introduced through the water inlet is lower than the set heating temperature, and when the water temperature introduced through the water inlet is lower than the set heating temperature, the heater driving periods are calculated.

[Advantageous Effects]

According to embodiments of the present invention, two heaters are provided in a warm water supply device and a heat driving period is calculated in a zero-crossing control scheme to control the number of voltage pulses applied to the heater, thereby reducing a generation of noise to prevent damage or overheating of the warm water supply device, and reducing a current swing to lengthen a lifetime and prevent a generation of malfunction.

[Description of Drawings]

FIG. 1 is a block diagram of a warm water supply control system according to an embodiment of the present invention;

FIG. 2 is a graph showing a phase control scheme according to an embodiment of the present invention;

FIG. 3 is a graph showing a zero-crossing control scheme according to an embodiment of the present invention;

FIG. 4 is a table showing heater power (ranging from 450 W to less than 750W) according to the number of voltage pulses applied to heaters according to an embodiment of the present invention;

FIG. 5 is a table showing heater power (ranging from 750W to less than 1200W) according to the number of voltage pulses applied to heaters according to an embodiment of the present invention;

FIG. 6 is a table showing results of a harmonics test and a flicker test according to heater power and heater driving scheme according to an embodiment of the present invention; and

FIG. 7 is a flow chart illustrating a process of a method of supplying warm water according to an embodiment of the present invention.

[Best Mode]

Hereinafter, embodiments of the present invention will now be described in detail with reference to the accompanying drawings. The invention may, however, be embodied in many different forms and should not be construed as being limited to the embodiments set forth herein. Rather, these embodiments are provided so that this disclosure will be thorough and complete, and will fully convey the scope of the invention to those skilled in the art. In the drawings, the shapes and dimensions of elements may be exaggerated for clarity, and the same reference numerals will be used throughout to designate the same or like components.

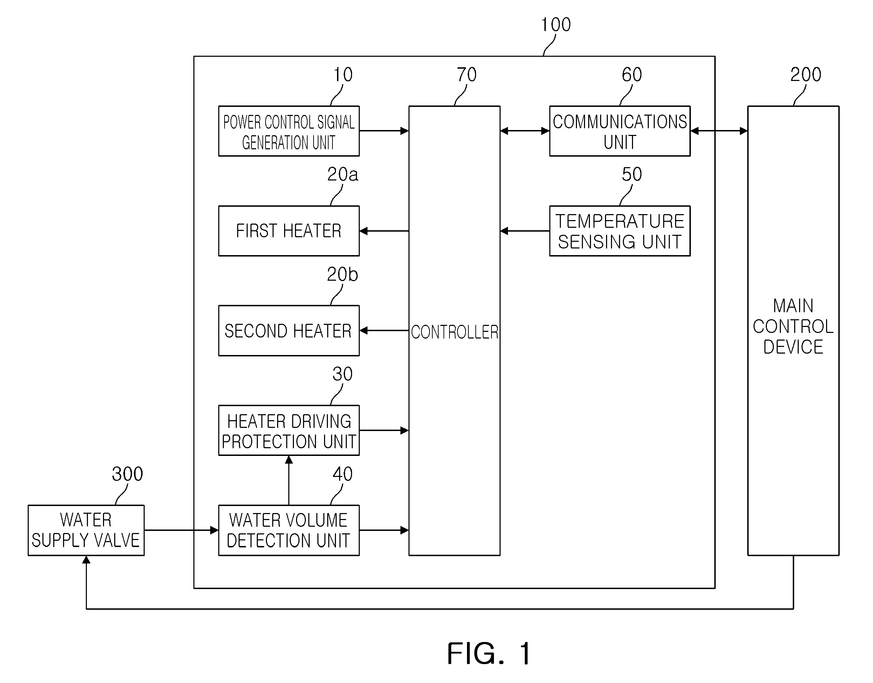

FIG. 1 is a block diagram of a warm water supply control system according to an embodiment of the present invention. With reference to FIG. 1, a warm water supply control system includes a warm water supply device 100, a main control device 200, and a water supply valve 300.

The warm water supply device 100 includes a power control signal generation unit 10, a first heater 20a, a second heater 20b, a heater driving protection unit 30, a water volume sensing unit 40, a temperature sensing unit 50, a communication unit 60, and a controller 70. The elements of the warm water supply device 100 will be described in detail as follows.

The first heater 20a is configured to have a first set capacity (e.g., 450W), be installed at a water inlet, and heat water introduced through the water inlet (not shown). The second heater 20b is configured to have a second set capacity (e.g., 750W) greater than that of the first set capacity, be provided at a water outlet, and heat water introduced through the water outlet. Water is introduced through the water inlet provided in the warm water supply device 100 and then discharged to the outside through the water outlet (not shown). The first heater 20a and the second heater 20b constitute a dual ceramic heater.

The water volume sensing unit 40 senses a volume of water introduced through the water inlet and transmits information regarding the water volume to the heater protection unit 30. The heater driving protection unit 30 determines whether or not the water volume of water introduced through the water inlet is equal to or higher than a pre-set value. When the water volume of water is equal to or greater than that of the pre-set value, the heater driving protection unit generates a heater driving availability signal and transmits the generated signal to the controller 70.

The power control signal generation unit 10 receives AC power voltage, obtains a period and a zero point of the received AC power voltage, and transmits the obtained period and zero point to the controller 70. A heater driving signal generated by the controller 70 is generated according to a heater driving period calculated based on the period and zero point provided from the power control signal generation unit 10.

The temperature sensing unit 50 senses a water temperature discharged from the water outlet. The temperature sensing unit 50 may be implemented as a thermistor. When the volume of water introduced through the water inlet is equal to or higher than a pre-set value, the temperature sensing unit 50 senses water temperature.

The controller 70 calculates a heater driving period of the first heater 20a and the second heater 20b according to a water temperature introduced to the water inlet and a set heating water temperature discharged from the water outlet by using a zero-crossing control scheme, and controls the number of voltage pulses applied to the first heater 20a and the second heater 20b according to the heater driving period to drive the first heater 20a and the second heater 20b.

In relation to controlling the number of voltage pulses applied to the first heater 20a and the second heater 20b, when required power consumption is more than 450W and 750W or less, the controller 70 may control such that the sum of the pulses applied to the first heater 20a and the second heater 20b is a pre-set number (e.g., 20).

Although not shown, when the number of the heaters is 3 or more, the controller 70 may perform controlling such that the sum of pulses applied to every heater is pre-set number. If necessary, the sum of the number of voltage pulses applied to the other remaining heaters excluding the first heater 20a and the second heater 20b may be previously set to control the other remaining heaters in the same manner as controlling the two heaters of the first heater 20a and the second heater 20b. In this case, the number of the pulses applied to the other remaining heaters excluding the first heater 20a and the second heater 20b may be determined in consideration of required power consumption.

Meanwhile, when required power consumption is more than 750W but less than 1200W, the controller may perform controlling such that the number of voltage pulses applied to the first heater 20a is equal to or less than a pre-set number (e.g., 20 pulses), and the number of voltage pulses applied to the second heater 20b is the pre-set number (e.g., 20 pulses).

Although not shown, when the number of heaters is 3 or more, the foregoing control method may be applied. Namely, the sum of power consumed by the respective heaters may be controlled to be equal to required power consumption by the number of voltage pulses applied to the respective heaters. If necessary, the sum of the number of voltage pulses applied to the other remaining heaters excluding the first heater 20a and the second heater 20b may be previously set to control the other remaining heaters in the same manner as controlling the two heaters of the first heater 20a and the second heater 20b. In this case, the number of the pulses applied to the other remaining heaters excluding the first heater 20a and the second heater 20b may be determined according to required power consumption. In this case, the number of the pulses applied to the other remaining heaters excluding the first heater 20a and the second heater 20b may be determined in consideration of required power consumption.

Also, the controller 70 may determine whether or not a water temperature introduced through the water inlet is lower than the set heating temperature. When the water temperature is lower than the set heating temperature, the controller 70 may calculate a heater driving period of the first heater 20a and the second heater 20b according to the water temperature introduced to the water inlet and the set heating water temperature discharged from the water outlet according to zero-crossing control scheme by using information regarding a water volume of water provided from the water volume sensing unit 40, information regarding the set heating water temperature provided from the main control device 200, and information regarding a water temperature introduced to the water inlet provided from the temperature sensing unit 50.

Also, the controller 70 determines whether or not a heater driving availability signal has been received from the heater driving protection unit 30. When the heater driving availability signal has been received, the controller 70 heats water introduced through the water inlet. The reason for determining whether or not the heater driving availability signal has been received is to prevent the controller 70 from generating a heater driving signal when water is not introduced through the water inlet.

The communication unit 60 transmits the value of the set heating temperature received from the main control device 200 to the controller 70 and transmits the information regarding a quantity of discharged water from the controller 70 and the information regarding a water temperature from the controller 70 to the main control device 200. Also, the communication unit 60 receives a DC power voltage from the main control device 200 and transmits the received voltage to the power control signal generation unit 10, the first heater 20a, the second heater 20b, the heater driving protection unit 30, the water volume sensing unit 40, the temperature detection unit 50, and the controller 70.

When a particular operation (cleaning, bidet, etc.) is requested by a user, the main control device 200 detects the request and opens the water supply valve 300 to allow water to be introduced through the water inlet. Also, the main control device 200 transmits a value of the set heating temperature to the controller 70 of the warm water supply device 100 to allow the warm water supply device 100 to perform a heating operation according to the set heating temperature.

The water supply valve 300 is switched on and off in response to the request from the main control device 200 to control water supply.

The warm water supply device according to an embodiment of the present invention as described above may be typically used in a bidet or a water purifier, and also variably used in any other devices using the same principle.

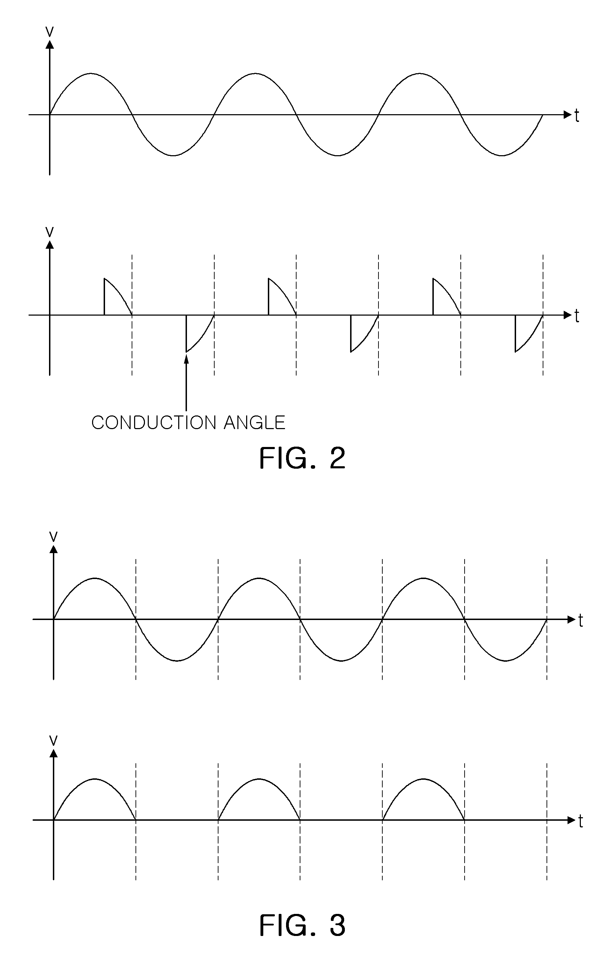

FIG. 2 is a graph showing a phase control scheme according to an embodiment of the present invention. With reference to FIG. 2, the upper graph shows an input power voltage V over time (t), and the lower graph shows a phase control voltage V over time (t). When the heater is driven according to the phase control scheme with the input power voltage V of the upper graph, the phase control voltage V as shown in the lower graph is output.

The phase control scheme is a scheme of applying a power voltage to the heater at a particular phase at every half period to cut off power at a zero voltage. In the phase control scheme, a phase angle at which the power voltage is applied is called a conduction angle, and here noise is generated due to harmonics at the conduction angle to potentially damage or overheat the device.

FIG. 3 is a graph showing a zero-crossing control scheme according to an embodiment of the present invention. With reference to FIG. 3, the upper graph shows input power voltage V over time (t), and the lower graph show a zero crossing control voltage V over time (t). When the heater is driven according to the zero crossing control scheme with the input power voltage of the upper graph, a zero crossing control voltage as shown in the below graph is output.

The zero crossing control scheme is a scheme of only applying a positive power voltage when applying an AC power voltage to the heater. This scheme involves an excessive current swing which may shorten a device lifetime and generate malfunctioning of the device.

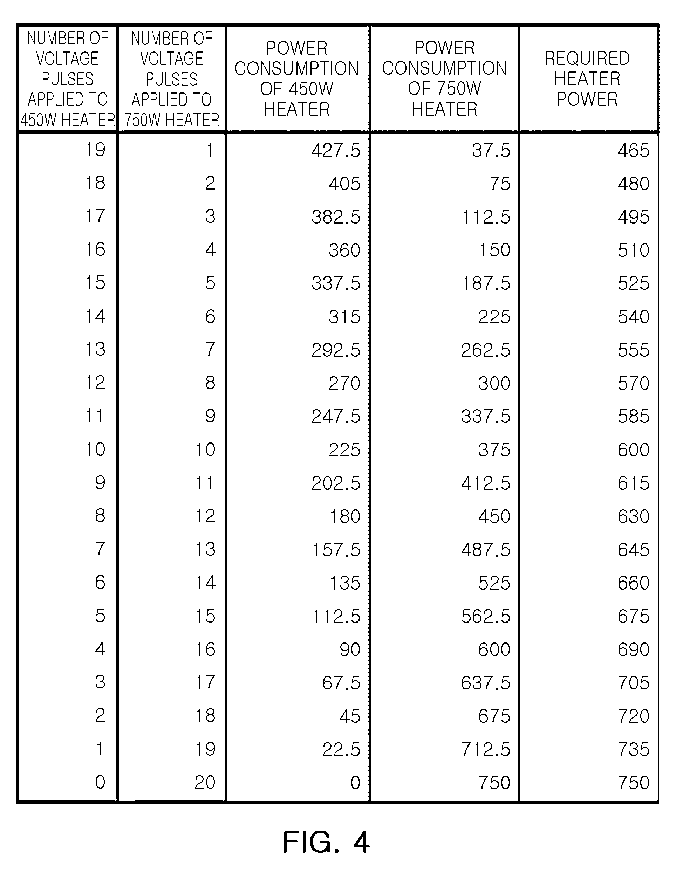

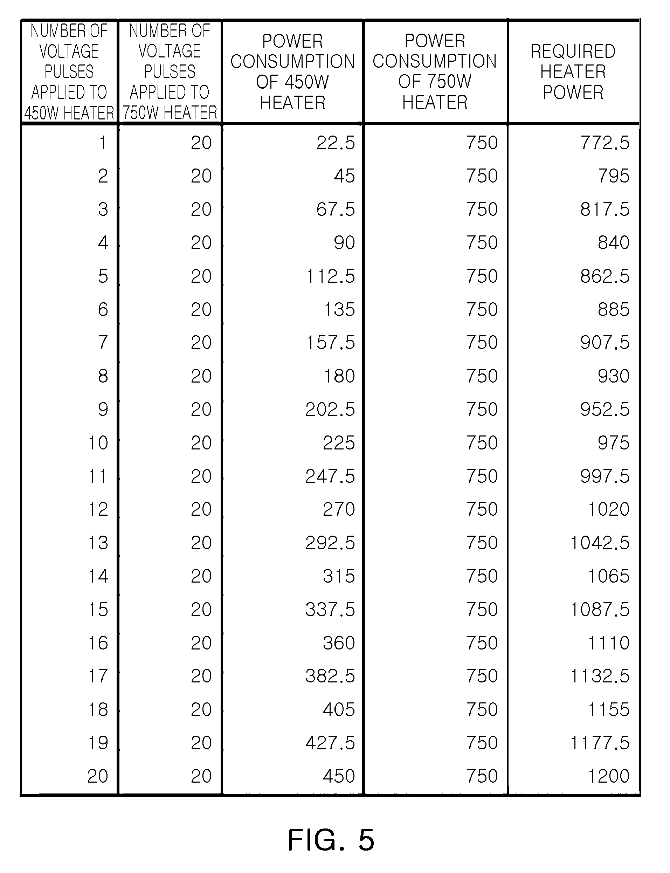

FIG. 4 is a table showing power consumption (ranging from 450W to less than 750W) according to the number of voltage pulses applied to a 450W heater and 750W heater according to an embodiment of the present invention. FIG. 5 is a table showing heater power (ranging from 750 W to 1200W) according to the number of voltage pulses applied to a 450W heater and a 750W heater according to an embodiment of the present invention.

When a flow rate per minute is set in a bidet or a water purifier, power consumption required for controlling to have a desired outflow water temperature according to a change in a inflow water temperature according to the surrounding environment can be obtained as expressed by Equation 1 shown below:

[Equation 1]

$$W = 4.186\, x\, \frac{M}{60}\, x\, (T_{out} - T_{in})$$

Here, W is power consumption, M is a flow rate per minute [cc/m], $T_{out}$ is an outflow water temperature [□], and $T_{in}$ is an inflow water temperature [□]. The inflow water temperature and the outflow water temperature can be measured by installing a thermistor at the water inlet and the water outlet of the warm water supply device, and the flow rate per minute can be measured by installing a flow rate sensor in a flow channel of the warm water supply device. Equation 1 is a relational expression formulating results obtained by measuring power consumption while changing an inflow water temperature and an outflow water temperature with the flow rate per minute [cc/m] set.

Here, when the 450W heater and the 750W heater are driven to generate required power consumption, the number of voltage pulses to be applied to the respective heaters and power consumption thereof are as shown in FIGS. 4 and 5. Here, 220V was applied to the 450W heater and the 750W heater from the outside, respectively.

With reference to FIG. 4, when required power consumption is equal to or more than 450W but less than 750W, the sum of the number of voltage pulses applied to the 450W heater and the 750W heater is 20.

When one pulse is applied, the 450W heater and the 750W heater generate power of 22.5W and 37.5W, respectively. For example, when required power consumption is 465W, 19 pulses are applied to the 450W heater and one pulse is applied to the 750W heater. Namely, it is calculated as 465=22.5x19+37.5x1.

As described above, when the required power consumption is 450W or more but less than 750W, both the 450W heater and the 750W heater may be driven simultaneously to minimize an instantly generated current swing to pass a flicker test.

With reference to FIG. 5, when required power consumption is 750W or more and less than 1200W, one to 20 voltage pulses may be applied to the 450W heater, and 20 voltage pulses may be applied to the 750W heater regardless of required power consumption. Namely, fixed power consumption is generated by the 750W heater and additionally required power consumption is generated by the 450W heater.

Likewise as in the case of FIG. 4, when one pulse is applied, the 450W heater and the 750W heater generate power of 22.5W and 37.5W, respectively. For example, when required power consumption is 772.5W, one pulse is applied to the 450W heater and 20 voltage pulses are applied to the 750W heater. Namely, it is calculated such that 772.5=22.5x1+37.5x20.

As described above, when the required power consumption is 750W or more but less than 1200W, both the 450W heater and the 750W heater may be driven simultaneously to minimize an instantly generated current swing to pass a flicker test.

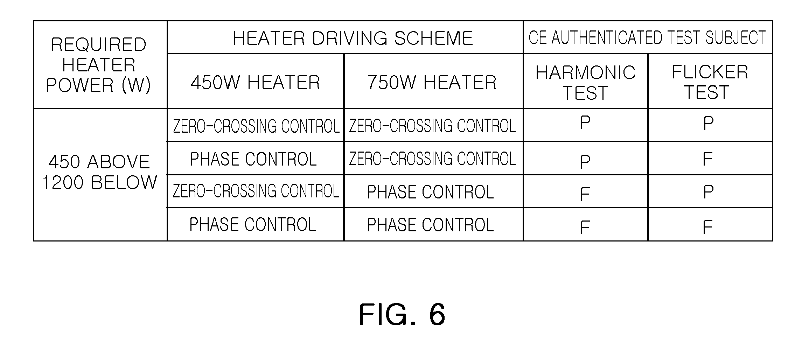

FIG. 6 is a table showing results of a harmonics test and a flicker test according to heater power and heater driving scheme according to an embodiment of the present invention. Here, P denotes 'pass', and F denotes 'fail'. In an embodiment of the present invention, when the heater was driven according to the zero crossing control scheme, a frequency was set to be 50 Hz (Authentication reference in Europe) and the number of voltage pulses applied during one period per heater was a maximum of 20 voltage pulses on the condition that both a harmonics test and a flicker test of the CE certification test subjects of European Union countries were passed.

With reference to FIG. 6, when required power consumption ranges from 450W to 1200W, the 450W heater and the 750W heater can be driven according to the phase control scheme and the zero crossing control scheme.

When both the 450W heater and the 750W heater are driven according to the zero crossing control scheme, both the 450W heater and the 750W heater pass the harmonics test and the flicker test, and when both the 450W heater and the 750W heater are driven according to the phase control scheme, both the 450W heater and the 750W heater fail the harmonics test and the flicker test.

When the 450W heater and the 750W heater are driven according to the phase control scheme and the zero crossing control scheme, respectively, the 450W heater and the 750W heater pass and fail the harmonics test and the flicker test, respectively.

When the 450W heater and the 750W heater are driven according to the zero crossing control scheme and the phase control scheme, respectively, the 450W heater and the 750W heater fail and pass the harmonics test and the flicker test, respectively.

As described above, in an embodiment of the present invention, the first heater and the second heater are driven by controlling the number of voltage pulses applied to the first heater and the second heater, respectively, so that when the heaters are driven according to the zero crossing control scheme, they can pass both the harmonics test and the flicker test of the CE certification test subjects of European Union countries.

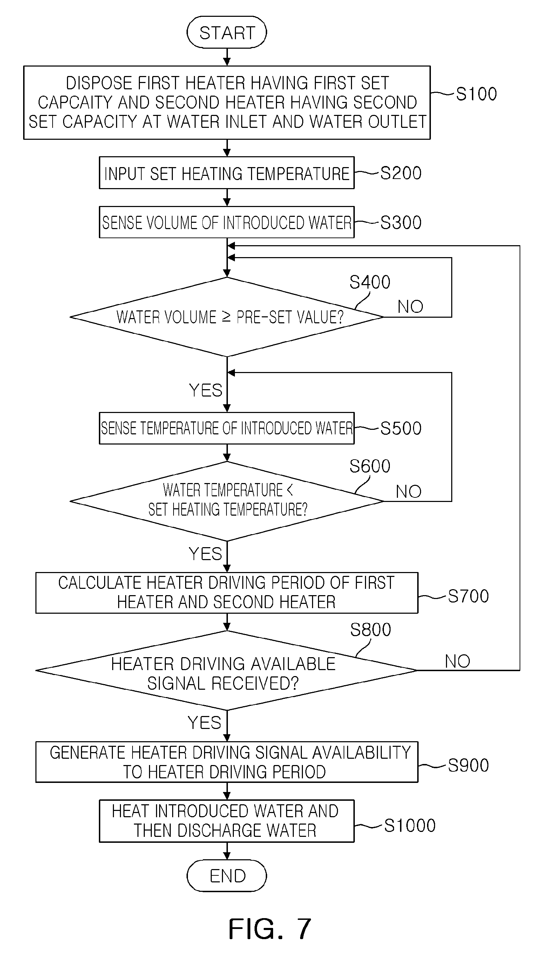

FIG. 7 is a flow chart illustrating a process of a method of supplying warm water according to an embodiment of the present invention. FIG. 7 will be described together with FIG. 1.

First, the first heater 20a having a first pre-set capacity and a second heater 20a having a second pre-set capacity greater than that of the first pre-set capacity are disposed at the water inlet and the water outlet (S100). Water is introduced through the water inlet provided in the warm water supply device 100 and the discharged to the outside through the water outlet (not shown). The first heater 20a and the second heater 20b constitute a dual ceramic heater.

Next, when a set heating temperature transmitted from the main control device 200 is input to the controller 70 (S200), the water volume sensing unit 40 senses the volume of water introduced through the water inlet and transmits information regarding the water volume to the heater driving protection unit 30 (S300).

And then, the heater driving protection unit 30 determines whether the water volume is equal to or greater than a pre-set value (S400). When the water volume is equal to or greater than that of the pre-set value, the temperature sensing unit 50 senses a water temperature discharged through the water outlet (S500). However, when the water volume is not greater than that of the pre-set value, step S400 is repeatedly performed.

Thereafter, the controller 70 determines whether or not the water temperature introduced through the water inlet is lower than the set heating temperature (S600). When the temperature of the water is not lower than the set heating temperature, the process is returned to step S500.

When the temperature of the water is lower than the set heating temperature, the controller 70 calculates a heater driving period of the first heater 20a and the second heater 20b according to the water temperature introduced to the water inlet and the set heating water temperature discharged from the water outlet according to zero-crossing control scheme by using information regarding a water volume of water provided from the water volume sensing unit 40, information regarding the set heating water temperature discharged through the water outlet as provided from the main control device 200, and information regarding a water temperature introduced to the water inlet provided from the temperature sensing unit 50 (S700).

Thereafter, the controller 70 determines whether or not a heater driving availability signal has been received from the heater driving protection unit 30 (S800). Here, in order to drive the first heater 20a and the second heater 20b, the controller 20 should receive the heater driving availability signal from the heater driving protection unit 30. The reason for determining whether or not the heater driving availability signal has been received is to prevent the controller 70 from generating a heater driving signal when water is not introduced through the water inlet.

Thereafter, when the heater driving availability signal has been received, the controller 70 generates a heater driving signal according to the heater driving period calculated based on a period and a zero point of AC power voltage, provided from the power control signal generation unit 10 (S900). Here, the controller 70 drives the first heater 20a and the second heater 20b by controlling the number of voltage pulses applied to the first heater 20a and the second heater 20b. However, when the controller has not received the heater driving availability signal from the heater driving protection unit 30 in step S800, the first heater 20a and the second heater 20b cannot heat water introduced through the water inlet, so the process is returned to step S400.

Thereafter, the first heater 20a and the second heater 20b heat water introduced through the water inlet and heated water is discharged through the water outlet (S1000). Accordingly, the warm water supply device can maintain discharged water at a user desired temperature.

**Claims**

1. A warm water supply device for controlling the number of voltage pulses applied to heaters, the device comprising:

 a first heater configured to have a first pre-set capacity, provided at a water inlet, and heating water introduced through the water inlet;
 a second heater configured to have a second pre-set capacity greater than that of the first pre-set capacity, provided at a water outlet, and heating water introduced through the water outlet; and
 a controller calculating a first heater driving period and calculating a second heater driving period according to a water temperature introduced through the water inlet and a set heating water temperature discharged through the water outlet by using a zero crossing control scheme, and driving the first and second heaters by controlling the number of voltage pulses applied to the first and second heater according to heater driving periods thereof, respectively.

2. The warm water supply device of claim 1, wherein the controller performs controlling such that the sum of the number of voltage pulses applied to the first and second heaters, respectively, is a pre-set number.

3. The warm water supply device of claim 1, wherein the controller performs controlling such that the number of voltage pulses applied to the first heater is within a pre-set number, and the number of voltage pulses applied to the second heater is a pre-set number.

4. The warm water supply device of claim 1, wherein the controller determines whether or not a water temperature introduced through the water inlet is lower than the set heating temperature, and when the temperature of the water is lower than the set heating temperature, the controller calculates the heater driving periods.

5. The warm water supply device of claim 1, wherein the first pre-set capacity is greater than 0 but not greater than 450W, and the second pre-set capacity is greater than 450W but not greater than 750W.

6. A warm water supply method for controlling the number of voltage pulses applied to heaters, the method comprising:

 disposing a first heater having a first pre-set capacity and a second heater having a second pre-set capacity greater than that of the first pre-set capacity at a water inlet and a water outlet, respectively;
 calculating heater driving periods of the first and second heaters according to a water temperature introduced through the water inlet and a set heating water temperature discharged through the water outlet by using a zero crossing control scheme; and
 driving the first and second heaters by controlling the number of voltage pulses applied to the first and second heaters according to the heater driving periods, respectively to heat water introduced through the water inlet and then allow the water to be discharged through the water outlet.

7. The method of claim 6, further comprising determining whether or not the water temperature introduced through the water inlet is lower than the set heating temperature, wherein when the water temperature introduced through the water inlet is lower than the set heating temperature, the heater driving periods are calculated.

FIG. 1

EP 2 503 258 A2

CONDUCTION ANGLE

FIG. 2

FIG. 3

| NUMBER OF VOLTAGE PULSES APPLIED TO 450W HEATER | NUMBER OF VOLTAGE PULSES APPLIED TO 750W HEATER | POWER CONSUMPTION OF 450W HEATER | POWER CONSUMPTION OF 750W HEATER | REQUIRED HEATER POWER |
|---|---|---|---|---|
| 19 | 1 | 427.5 | 37.5 | 465 |
| 18 | 2 | 405 | 75 | 480 |
| 17 | 3 | 382.5 | 112.5 | 495 |
| 16 | 4 | 360 | 150 | 510 |
| 15 | 5 | 337.5 | 187.5 | 525 |
| 14 | 6 | 315 | 225 | 540 |
| 13 | 7 | 292.5 | 262.5 | 555 |
| 12 | 8 | 270 | 300 | 570 |
| 11 | 9 | 247.5 | 337.5 | 585 |
| 10 | 10 | 225 | 375 | 600 |
| 9 | 11 | 202.5 | 412.5 | 615 |
| 8 | 12 | 180 | 450 | 630 |
| 7 | 13 | 157.5 | 487.5 | 645 |
| 6 | 14 | 135 | 525 | 660 |
| 5 | 15 | 112.5 | 562.5 | 675 |
| 4 | 16 | 90 | 600 | 690 |
| 3 | 17 | 67.5 | 637.5 | 705 |
| 2 | 18 | 45 | 675 | 720 |
| 1 | 19 | 22.5 | 712.5 | 735 |
| 0 | 20 | 0 | 750 | 750 |

FIG. 4

| NUMBER OF VOLTAGE PULSES APPLIED TO 450W HEATER | NUMBER OF VOLTAGE PULSES APPLIED TO 750W HEATER | POWER CONSUMPTION OF 450W HEATER | POWER CONSUMPTION OF 750W HEATER | REQUIRED HEATER POWER |
|---|---|---|---|---|
| 1 | 20 | 22.5 | 750 | 772.5 |
| 2 | 20 | 45 | 750 | 795 |
| 3 | 20 | 67.5 | 750 | 817.5 |
| 4 | 20 | 90 | 750 | 840 |
| 5 | 20 | 112.5 | 750 | 862.5 |
| 6 | 20 | 135 | 750 | 885 |
| 7 | 20 | 157.5 | 750 | 907.5 |
| 8 | 20 | 180 | 750 | 930 |
| 9 | 20 | 202.5 | 750 | 952.5 |
| 10 | 20 | 225 | 750 | 975 |
| 11 | 20 | 247.5 | 750 | 997.5 |
| 12 | 20 | 270 | 750 | 1020 |
| 13 | 20 | 292.5 | 750 | 1042.5 |
| 14 | 20 | 315 | 750 | 1065 |
| 15 | 20 | 337.5 | 750 | 1087.5 |
| 16 | 20 | 360 | 750 | 1110 |
| 17 | 20 | 382.5 | 750 | 1132.5 |
| 18 | 20 | 405 | 750 | 1155 |
| 19 | 20 | 427.5 | 750 | 1177.5 |
| 20 | 20 | 450 | 750 | 1200 |

FIG. 5

| REQUIRED HEATER POWER (W) | HEATER DRIVING SCHEME | | CE AUTHENTICATED TEST SUBJECT | |
|---|---|---|---|---|
| | 450W HEATER | 750W HEATER | HARMONIC TEST | FLICKER TEST |
| 450 ABOVE 1200 BELOW | ZERO-CROSSING CONTROL | ZERO-CROSSING CONTROL | P | P |
| | PHASE CONTROL | ZERO-CROSSING CONTROL | P | F |
| | ZERO-CROSSING CONTROL | PHASE CONTROL | F | P |
| | PHASE CONTROL | PHASE CONTROL | F | F |

FIG. 6

EP 2 503 258 A2

START

DISPOSE FIRST HEATER HAVING FIRST SET CAPCAITY AND SECOND HEATER HAVING SECOND SET CAPACITY AT WATER INLET AND WATER OUTLET ⏤ S100

INPUT SET HEATING TEMPERATURE ⏤ S200

SENSE VOLUME OF INTRODUCED WATER ⏤ S300

S400
WATER VOLUME ≥ PRE-SET VALUE? — NO

YES

SENSE TEMPERATURE OF INTRODUCED WATER ⏤ S500

S600
WATER TEMPERATURE < SET HEATING TEMPERATURE? — NO

YES

CALCULATE HEATER DRIVING PERIOD OF FIRST HEATER AND SECOND HEATER ⏤ S700

S800
HEATER DRIVING AVAILABLE SIGNAL RECEIVED? — NO

YES

GENERATE HEATER DRIVING SIGNAL AVAILABILITY TO HEATER DRIVING PERIOD ⏤ S900

HEAT INTRODUCED WATER AND THEN DISCHARGE WATER ⏤ S1000

END

FIG. 7